# FASCICULE DE BREVET EUROPEEN

(11) **EP 2 333 704 B1**
(45) Date de publication et mention de la délivrance du brevet: **19.09.2012**
(21) Numéro de dépôt: 10188669.5
(22) Date de dépôt: 25.10.2010
(51) Int. Cl.: G06K 19/077

(54) **Corps de carte à microcircuit formant support de deux étiquettes électroniques**
Mikrochipkartenkörper, der als Träger für zwei elektronische Etiketten fungiert
Microcircuit card body forming the support for two electronic labels

(30) Priorité: 25.11.2009 FR 0958343
(43) Date de publication de la demande: 15.06.2011
(73) Titulaire: Oberthur Technologies, 92300 Levallois-Perret (FR)
(72) Inventeur: Laknin, Mourad, 35500 Vitré (FR); Fortel, Julien, 35500 Vitré (FR)
(74) Mandataire: Delumeau, François Guy

(56) Documents cités:
- WO-A1-2009/080126
- WO-A2-03/030093
- FR-A1- 2 835 338
- US-A1- 2006 125 640

## Description

La présente invention concerne le domaine technique des étiquettes électroniques de type sans contact.

On entend par étiquette électronique, un ensemble comprenant un support, un circuit de communication en champ proche de type NFC (acronyme anglo-saxon pour « Near Field Communication ») ou RFID (acronyme anglo-saxon pour « Radio Frequency lDentity ») permettant l'établissement d'une communication sans contact avec un dispositif externe.

Un tel circuit de communication comprend par exemple une puce électronique et une antenne de communication en champ proche. L'antenne est généralement raccordée à la puce électronique et sert non seulement de moyen de communication sans contact mais également à produire l'énergie nécessaire à l'alimentation de la puce électronique.

Il est connu de former le support de l'étiquette électronique dans une partie prédécoupée d'un corps de carte à puce au format normalisé. Habituellement, le corps d'une carte à puce a un format standard défini par une norme, par exemple la norme ISO-7816. Le format classique des cartes bancaires est par exemple le format ID-1 de cette norme.

Ceci permet notamment de mettre à profit les machines-outils de production existantes adaptées au format de cartes à puce standard pour la fabrication de telles étiquettes électroniques même si le format de ces dernières n'est pas normalisé.

A l'issue des étapes de fabrication ou lors de la vente du produit, la partie délimitant le support de l'étiquette électronique est détachée et le surplus de plastique entourant le support est jeté.

Ceci est particulièrement coûteux et particulièrement peu écologique et ce d'autant plus que, généralement, le support de l'étiquette électronique représente moins de la moitié de la surface totale du corps de carte dans lequel il est prédécoupé.

Afin de tenir compte des enjeux économiques et écologiques actuels, une solution consiste à former au moins deux étiquettes dans un même corps de carte. Dans ce cas, le corps de carte comprend deux circuits de communication en champ proche, un pour chaque étiquette, chaque circuit comprenant notamment un microcircuit et une antenne de communication en champ proche.

Une telle solution est notamment divulguée dans le document FR2835338.

Or, la présence de ces deux circuits présente un inconvénient certain lors des étapes de personnalisation électronique des étiquettes électroniques. Par personnalisation électronique, on entend notamment l'incorporation de données dans une mémoire du microcircuit, ces données correspondant par exemple à des données d'identification d'un utilisateur futur de cette étiquette.

Lors de la personnalisation électronique des étiquettes, des données spécifiques à chaque étiquette sont transférées au microcircuit de chaque étiquette au moyen d'un champ magnétique émis par un équipement externe. Afin d'optimiser le délai de personnalisation, le corps de carte est acheminé sous l'équipement externe émettant le champ magnétique. Il existe ainsi un risque important que le champ magnétique émis par le lecteur atteigne simultanément les deux étiquettes alors qu'une seule des deux ne doit être atteinte pour recevoir les données qui lui sont spécifiquement destinées.

Par conséquent, à l'issue de ces étapes, il peut subsister un doute quant à la personnalisation réellement opérée pour chacune des étiquettes.

L'invention a notamment pour but de proposer une solution simple permettant de réduire les coûts de production et le gaspillage de matière tout en offrant une personnalisation spécifique fiable des étiquettes électroniques.

A cet effet, l'invention a notamment pour objet un dispositif électronique selon la revendication 1.

Grâce aux moyens de blindage magnétique, la personnalisation des étiquettes est réalisée indépendamment l'une de l'autre. En effet, lors de la personnalisation électronique de l'étiquette, par application du champ magnétique sur une face du corps de carte, ce champ magnétique ne peut atteindre qu'un des deux moyens de communication car l'autre des moyens de communication est protégé par les moyens de blindage qui sont disposés entre la face du corps et les moyens de communication. Ainsi, pour personnaliser les deux étiquettes, il faut retourner le corps de carte. Il n'y a donc plus aucune ambiguïté quant à la personnalisation réellement opérée pour chaque étiquette.

En outre, de telles étiquettes électroniques peuvent trouver une application particulièrement avantageuse dans l'équipement d'objets présentant des surfaces métalliques, tels que par exemple des terminaux de téléphonie mobile. L'étiquette électronique est par exemple collée directement sur le corps du terminal mobile et est protégé de l'influence magnétique générée par la surface métallique grâce aux moyens de blindage magnétique ce qui permet de limiter l'influence de l'environnement des parties métalliques sur la communication susceptible d'être établie entre l'étiquette et un lecteur spécialisé externe.

De telles cartes peuvent comprendre en plus d'une interface sans contact, une interface physique de contacts externes.

Un dispositif selon l'invention peut en outre comporter l'une ou l'autre des caractéristiques selon lesquelles;
- les moyens de communication et les moyens de blindage sont agencés l'un au-dessus de l'autre dans le sens de l'épaisseur de l'étiquette, l'étiquette étant délimitée par une première face de lecture en regard des moyens de communication et une deuxième de blindage magnètique en regard des de blindage ,
- la deuxième face de chaque étiquette est munie d'un revêtement adhésif pour l'application de l'étiquette sur un objet par collage;
- les étiquettes électroniques sont disposées l'une à côté de l'autre selon une direction longitudinale du corps de carte ;
- le corps de carte est au format ID-1 de la norme IS07816;
- le corps de carte est munie d'une ligne de fragilisation séparant au moins deux zones portant chacune une des étiquettes électroniques ;
- chaque étiquette électronique est prédécoupée dans le corps de carte ;
- les moyens de blindage comprennent une couche de ferrite ;
- les moyens de communication en champ proche comprennent une antenne de communication en champ proche et un microcircuit raccordé à l'antenne ;
- pour chaque étiquette électronique, les moyens de blindage couvrent tout ou partie d'une surface de l'antenne ;
- le corps de la carte est réalisé dans une matière plastique.

L'invention a également pour objet un procédé de fabrication d'un dispositif électronique selon l'invention, comprenant une étape de personnalisation d'au moins la première étiquette par application d'un champ magnétique sur le corps de carte, caractérisé en ce que l'on retourne la carte pour personnaliser la deuxième étiquette.

D'autres caractéristiques et avantages de l'invention apparaîtront à la lumière de la description qui suit, faite en référence aux dessins annexés dans lesquels :
- la figure 1 représente un dispositif électronique selon l'invention formant support de deux étiquettes électroniques sans contact ;
- la figure 2 illustre de façon schématique une étape de personnalisation d'une des étiquettes de la figure 1 ;
- la figure 3 représente un téléphone mobile portant une des étiquettes électroniques sans contact du dispositif de la figure 1.

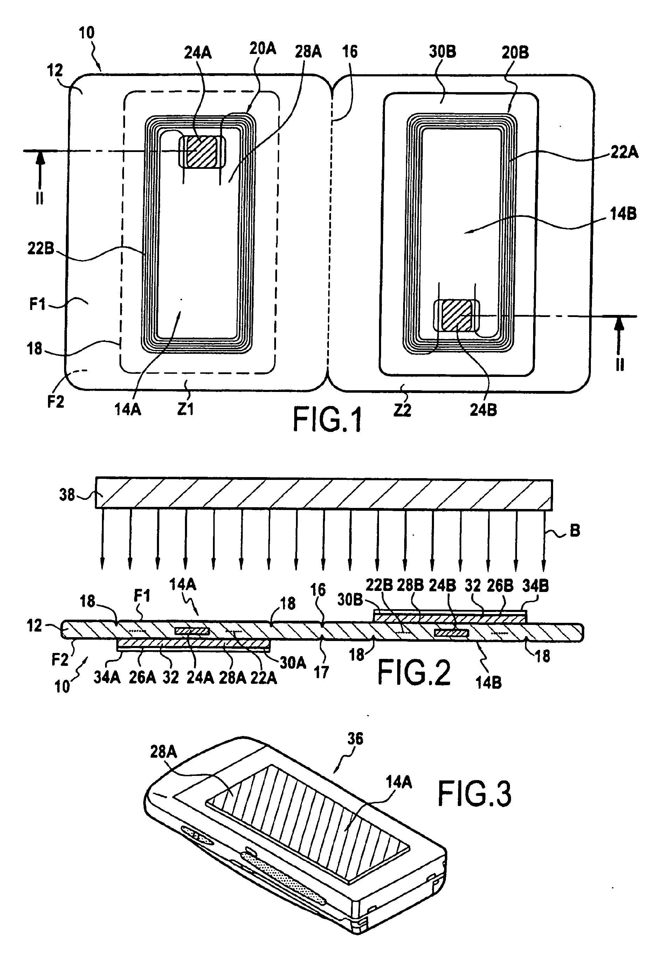

On a représenté sur **la** **figure 1** un dispositif électronique selon l'invention. Ce dispositif est désigné par la référence générale 10.

Le dispositif 10 comprend un corps de carte à microcircuit 12. Ce corps de carte 12 délimite des dimensions extérieures conformes par exemple au format ID-1 de la norme ISO 7816. Conformément à cette norme, les dimensions du corps 12 sont donc de 85.60 millimètres par 53.98 millimètres. Ce format est classiquement utilisé pour les cartes bancaires. De préférence, le corps 12 est par exemple réalisé dans une matière plastique telle que du polycarbonate, du PVC (polychlorure de vinyle), etc.

Plus particulièrement, le corps 12 forme un support pour au moins des première 14A et deuxième 14B étiquettes électroniques.

De préférence, ces étiquettes électroniques 14A, 14B sont disposées l'une à côté de l'autre selon une direction longitudinale du corps de carte 12. Par exemple, les dimensions de chaque étiquette 14A, 14B sont de 48 millimètres par 25 millimètres.

En outre, dans l'exemple décrit, le corps de carte 12 est munie d'une ligne de fragilisation 16 séparant au moins deux zones Z1, Z2 portant chacune une des étiquettes électroniques 14A, 14B. Cette ligne de fragilisation 16 comprend par exemple deux incisions 17 non traversantes à profil en V et réalisées sur chaque face F1, F2 du corps 12 en regard l'une de l'autre (**figures 1 et 2**).

Dans une variante non illustrée, la ligne de fragilisation 16 peut comporter une unique incision non traversante réalisée sur une seule des faces F1 ou F2 mais plus profonde. Cette ligne de fragilisation 16 est dans l'exemple décrit une ligne médiane du corps de carte 12 séparant deux zones Z1 et Z2 d'aire sensiblement égales et les étiquettes 14A, 14B sont chacune disposées sensiblement au centre de leurs zones respectives Z1 et Z2.

Par ailleurs, chaque étiquette 14A, 14B est prédécoupée dans le corps de carte 12. Par exemple, le corps de carte 12 comporte des lignes de prédécoupe 18 délimitant respectivement les première et deuxième étiquettes 14A, 14B. Ces lignes de prédécoupe 18 peuvent entourer partiellement ou complètement les étiquettes 14A, 14B de manière à faciliter la séparation de ces dernières du corps de carte 12.

Par la suite, on notera par les références numériques des éléments associés à la première étiquette 14A avec un indice A et les éléments associés à la deuxième étiquette 14B avec un indice B. Dans la suite de la description, on décrira en détail l'étiquette 14A. Bien entendu, la description détaillée de l'étiquette 14A s'applique également à l'étiquette 14B.

La première étiquette 14A comprend en outre des premiers moyens électroniques de communication en champ proche 20A susceptibles d'être activés par l'application d'un champ magnétique B. Dans cet exemple, les moyens de communication 20A comprennent une antenne de communication en champ proche 22A ainsi qu'un microcircuit 24A raccordé à l'antenne 22A. Ces moyens de communication 20A sont aptes à communiquer avec un équipement externe, tel qu'un lecteur spécialisé, par exemple conformément au protocole de communication en champ proche défini par la norme ISO 14 443.

En général, pour établir la communication sans contact avec un équipement distant tel qu'un lecteur spécialisé, l'étiquette 14A est dépourvue d'alimentation autonome et reçoit de l'énergie en provenance du lecteur avec lequel elle communique sous forme de signaux électromagnétiques.

De façon connue en soi, le microcircuit 24A de l'étiquette 14A, raccordé à l'antenne 22A, transmet de l'information vers le lecteur par la technique de rétro-modulation. Par cette technique, le microcircuit 24A fait varier sa charge en fonction des données à transmettre, modifiant ainsi le champ magnétique total B.

De préférence, l'antenne 22A comprend une pluralité de spires enroulées en périphérie du support de l'étiquette 14A et délimite ainsi une surface d'antenne S **(****figure 1****).**

Plus précisément et conformément à l'invention, les première 14A et deuxième 14B étiquettes comprennent en outre respectivement des premiers 26A et deuxièmes 26B moyens de blindage magnétique. Ces moyens 26A, 26B ont notamment pour fonction d'empêcher la transmission du champ magnétique dans les moyens de communication respectifs 20A, 20B.

De préférence, les moyens de blindage magnétique 26A, 26B couvrent tout ou partie de la surface S de l'antenne 22A, 22B de chaque étiquette 14A, 14B.

De préférence, les moyens de communication 20A et les moyens de blindage 26A sont agencés l'un au-dessus de l'autre dans le sens de l'épaisseur de l'étiquette 14A, l'étiquette 14A délimitant une première face de lecture 28A en regard des moyens de communication 20A et une deuxième face de blindage magnétique 30A en regard des moyens de blindage 26A.

Par exemple, les moyens de blindage 26A comprennent une couche d'un matériau 32 comprenant essentiellement de la ferrite. Dans l'exemple décrit, la couche de matériau 32 a une épaisseur sensiblement de 200 micromètres et une perméabilité magnétique de 110.

De préférence, la deuxième face de blindage magnétique 30A, 30B de chaque étiquette 14A, 14B est munie d'un revêtement adhésif 34A, 34B pour l'application de l'étiquette 14A, 14B sur un objet par collage. Par exemple, le revêtement 34 comprend une couche adhésive muni d'un film protecteur non-adhésif retirable lors du collage.

En outre, plus précisément et comme cela est visible sur la **figure 2**, les premier 26A et deuxième 26B moyens de blindage sont agencés respectivement sur la deuxième face F2 du corps 12 et au-dessus des premiers moyens de communication 20A et sur la première face F1 du corps 12 et au-dessus des deuxièmes moyens de communication 20B. Ainsi, ces moyens de blindage 26A, 26B sont agencés relativement entre eux de manière à ce que l'application du champ magnétique B sur l'une des faces F1, F2 du corps 12 ne provoque l'activation que d'un seul parmi les premiers 20A et deuxièmes 20B moyens de communication.

Ainsi, comme cela est illustré sur la **figure 2**, lorsque le corps de carte 12 portant les deux étiquettes 14A, 14B est soumis à un champ magnétique B en provenance d'un lecteur spécialisé 38, par exemple un dispositif de personnalisation, une seule des deux étiquettes peut établir une communication sans contact avec le lecteur.

En effet, dans l'exemple illustré sur cette figure, le champ magnétique émis par le lecteur est bloqué par les moyens de blindage magnétique 26B de la deuxième étiquette 14B alors que ce même champ magnétique B est transmis dans l'étiquette 14A provoquant l'activation des moyens de communication 20A de la première étiquette 14A et l'établissement d'une communication sans contact avec le lecteur.

Sur la **figure 3**, on a représenté l'étiquette 14A rapportée sur un objet tel qu'un terminal mobile 36 pour embarquer une fonction de paiement sans contact dans ce terminal 36.

Dans ce type d'application, il est important d'isoler la fonction de paiement sans contact de tout environnement électronique et métallique du téléphone mobile, notamment de la batterie du terminal ou encore d'un boîtier métallique. Les moyens de blindage 26A ont ainsi également pour fonction de permettre un bon fonctionnement du circuit de communication en champ proche même en présence de métal dans un environnement proche de l'antenne.

On va maintenant décrire les principaux aspects de fonctionnement d'un dispositif selon l'invention.

Tout d'abord, on réalise un corps de carte 12 incorporant deux antennes et deux microcircuits. Par exemple, le corps de carte 12 est réalisé par lamination des couches entre elles, au moins une des couches incorporant les antennes et les microcircuits. Une fois le corps de carte formé, on procède à la personnalisation de chaque étiquette électronique 14A, 14B.

Pour personnaliser la première étiquette électronique 14A, on fait passer le corps de carte 12 sous le lecteur spécialisé avec sa première face F1 tournée en direction du lecteur 38. Dans cette position, la face de lecture 28A de la première étiquette 14A et la face de blindage 30B de la deuxième étiquette 14B sont tournées vers le lecteur. Le champ magnétique B émis par le lecteur 38 pour la transmission de données spécifiquement destinées à la première étiquette 14A n'atteint que cette dernière alors que le champ B est réfléchi par la deuxième étiquette 14B et plus précisément par les moyens de blindage 26B.

Une fois la personnalisation de la première étiquette 14A réalisée, une machine-outil retourne la carte 10 pour que la deuxième face F2 du corps 12 soit orientée vers le lecteur 38. Dans ce cas, la situation est inversée et la personnalisation de la deuxième étiquette 14B est réalisée.

Une fois les étiquettes 14A, 14B personnalisées, le corps 12 passe dans une machine-outil de prédécoupe pour former les différentes entailles définissant les lignes de prédécoupe et de fragilisation 16 et 18. Eventuellement, ces étapes de découpage peuvent être réalisées avant la personnalisation.

Le dispositif électronique 10 est alors achevé et peut être commercialisé tel quel ou encore sous forme de deux plaquettes indépendantes portant chacune une étiquette 14A, 14B obtenue par séparation des deux zones Z1 , Z2 le long de la ligne de fragilisation 16. Chaque étiquette 14A, 14B peut être ensuite séparée de la plaquette de façon simple pour son utilisation.

En outre, de telles étiquettes sont parfaitement adaptées pour être utilisées au voisinage proche d'un objet métallique, voire même peuvent être sans inconvénient apposées sur un support métallique, tels qu'un terminal de téléphonie mobile.

Il est bien entendu que les modes de réalisation qui viennent d'être décrits ne présentent aucun caractère limitatif et qu'ils pourront recevoir toute modification désirable sans sortir pour cela du cadre de l'invention défini par les revendications. En particulier, il serait conforme à l'invention de former plus de deux étiquettes dans le corps de carte en les agençant entre elles de façon à limiter au mieux les perturbations magnétiques susceptibles d'être générées lors d'une personnalisation opérée par champ proche de l'une des étiquettes.

## Revendications

1. Dispositif électronique (10) comprenant un corps de carte (12) à microcircuit (24) formant support pour au moins des première (14A) et deuxième (14B) étiquettes électroniques, les étiquettes (14A, 14B) comprenant respectivement des premiers (20A) et deuxièmes (20B) moyens électroniques de communication en champ proche susceptibles d'être activés par l'application d'un champ magnétique (B), **caractérisé en ce que** les première et deuxième étiquettes (14A, 14B) comprennent en outre respectivement des premiers (26A) et deuxièmes (26B) moyens de blindage magnétique agencés relativement entre eux, de manière à ce que l'application du champ magnétique (B) sur l'une des faces (F1, F2) du corps (12) ne provoque l'activation que d'un seul parmi les premiers et deuxièmes moyens de communication (20A, 20B).

2. Dispositif (10) selon la revendication précédente, dans lequel les moyens de communication (20A, 20B) et les moyens de blindage (26A, 26B) sont agencés l'un au-dessus de l'autre dans le sens de l'épaisseur de chacune des étiquettes (14A, 14B), chacune des étiquettes (14A, 14B) délimitant une première face de lecture (28A, 28B) en regard des moyens de communication (20A, 20B) et une deuxième face de blindage (30A, 30B) magnétique en regard des moyens de blindage (26A, 26B).

3. Dispositif (10) selon la revendication précédente, dans lequel la deuxième face (30A, 30B) de chaque étiquette (14A, 14B) est munie d'un revêtement adhésif (34A, 34B) pour l'application de l'étiquette (14A, 14B) sur un objet (36) par collage.

4. Dispositif (10) selon l'une quelconque des revendications précédentes, dans lequel les étiquettes électroniques (14A, 14B) sont disposées l'une à côté de l'autre selon une direction longitudinale du corps de carte (12).

5. Dispositif (10) selon l'une quelconque des revendications précédentes, dans lequel le corps de carte (12) est au format ID-1 de la norme ISO-7816.

6. Dispositif (10) selon l'une quelconque des revendications précédentes, dans lequel le corps de carte (12) est munie d'une ligne de fragilisation (16) séparant au moins deux zones portant chacune une des étiquettes électroniques (14A, 14B).

7. Dispositif (10) selon l'une quelconque des revendications précédentes, dans lequel chaque étiquette électronique (14A, 14B) est prédécoupée dans le corps de carte (12).

8. Dispositif (10) selon l'une quelconque des revendications précédentes, dans lequel les moyens de blindage magnétique (26A, 26B) comprennent une couche de ferrite (32).

9. Dispositif (10) selon l'une quelconque des revendications précédentes, dans lequel les moyens de communication en champ proche (20A, 20B) comprennent une antenne de communication en champ proche (22A, 22B) et un microcircuit (24A, 24B) raccordé à l'antenne (22A, 22B).

10. Dispositif (10) selon la revendication précédente, dans lequel, pour chaque étiquette électronique (14A, 14B), les moyens de blindage (26A, 26B) couvrent tout ou partie d'une surface (S) de l'antenne (22A, 22B).

11. Dispositif (10) selon l'une quelconque des revendications précédentes, dans lequel le corps de carte (12) est réalisé dans une matière plastique.

12. Procédé de fabrication d'un dispositif électronique (10) selon l'une quelconque des revendications précédentes, comprenant une étape de personnalisation d'au moins la première étiquette (14A) par application d'un champ magnétique (B) sur le corps de carte (12), **caractérisé en ce que** l'on retourne le corps de carte (12) pour personnaliser la deuxième étiquette (14B).

## Claims

1. An electronic device (10) comprising a card body (12) having a microcircuit (24) and forming a medium for at least first and second electronic labels (14A, 14B), the labels (14A, 14B) having respective first and second near-field electronic communications means (20A, 20B) suitable for being activated by applying a magnetic field (B), the device being **characterized in that** the first and second labels (14A, 14B) also include respective first and second magnetic shielding means (26A, 26B) arranged relative to each other in such a manner that applying the magnetic field (B) to one of the faces (F1, F2) of the body (12) activates only one of the first and second communications means (20A, 20B).

2. A device (10) according to the preceding claim, wherein the communications means (20A, 20B) and the shielding means (26A, 26B) are arranged one above the other in the thickness direction of each of the labels (14A, 14B), each of the labels (14A, 14B) defining a first face (28A, 28B) for reading purposes facing the communications means (20A, 20B), and a second face (30A, 30B) for magnetic shielding purposes facing the shielding means (26A, 26B).

3. A device (10) according to the preceding claim, wherein the second face (30A, 30B) of each label (14A, 14B) is provided with an adhesive coating (34A, 34B) for adhesively bonding the label (14A, 14B) to an article (36).

4. A device (10) according to any preceding claim, wherein the electronic labels (14A, 14B) are placed one beside the other in a longitudinal direction of the card body (12).

5. A device (10) according to any preceding claim, wherein the card body (12) is in the ID-1 format of the ISO-7816 standard.

6. A device (10) according to any preceding claim, wherein the card body (12) is provided with a line of weakness (16) separating at least two zones, each carrying a respective electronic label (14A, 14B).

7. A device (10) according to any preceding claim, wherein each electronic label (14A, 14B) is pre-cutout in the card body (12).

8. A device (10) according to any preceding claim, wherein the magnetic shielding means (26A, 26B) comprise a layer of ferrite (32).

9. A device (10) according to any preceding claim, wherein the near-field communications means (20A, 20B) comprise a near-field communications antenna (22A, 22B) and a microcircuit (24A, 24B) connected to the antenna (22A, 22B).

10. A device (10) according to the preceding claim, wherein, for each electronic label (14A, 14B), the shielding means (26A, 26B) cover all or part of the area (S) of the antenna (22A, 22B).

11. A device (10) according to any preceding claim, wherein the card body (12) is made of a plastics material.

12. A method of fabricating an electronic device (10) according to any preceding claim, the method including a step of personalizing at least the first label (14A) by applying a magnetic field (B) to the card body (12), the method being **characterized in that** the card body (12) is turned over in order to personalize the second label (14B) .

## Patentansprüche

1. Elektronische Vorrichtung (10), umfassend einen Kartenkörper (12) mit Mikroschaltkreis (24), der einen Träger für wenigstens ein erstes (14A) und ein zweites (14B) elektronisches Etikett bildet, wobei die Etiketten (14A, 14B) erste (20A) bzw. zweite (20B) elektronische Nahfeldkommunikationsmittel umfassen, die geeignet sind, durch Anlegen eines Magnetfeldes (B) aktiviert zu werden, **dadurch gekennzeichnet, daß** das erste und das zweite Etikett (14A, 14B) ferner erste (26A) bzw. zweite (26B) Mittel zur magnetischen Abschirmung umfassen, die relativ zueinander angeordnet sind, derart, daß das Anlegen des Magnetfeldes (B) an eine der Seiten (F1, F2) des Körpers (12) die Aktivierung von nur einem der ersten und zweiten Kommunikationsmittel (20A, 20B) bewirkt.

2. Vorrichtung (10) nach dem vorhergehenden Anspruch, wobei die Kommunikationsmittel (20A, 20B) und die Abschirmungsmittel (26A, 26B) in Richtung der Dicke eines jeden der Etiketten (14A, 14B) übereinander angeordnet sind, wobei ein jedes der Etiketten (14A, 14B) eine erste Leseseite (28A, 28B) gegenüber den Kommunikationsmitteln (20A, 20B) und eine zweite Seite zur magnetischen Abschirmung (30A, 30B) gegenüber den Abschirmungsmitteln (26A, 26B) begrenzen.

3. Vorrichtung (10) nach dem vorhergehenden Anspruch, wobei die zweite Seite (30A, 30B) eines jeden Etiketts (14A, 14B) mit einer Haftbeschichtung (34A, 34B) für das Aufkleben des Etiketts (14A, 14B) auf einen Gegenstand (36) versehen ist.

4. Vorrichtung (10) nach einem der vorhergehenden Ansprüche, wobei die elektronischen Etiketten (14A, 14B) entlang einer Längsrichtung des Kartenkörpers (12) nebeneinander angeordnet sind.

5. Vorrichtung (10) nach einem der vorhergehenden Ansprüche, wobei der Kartenkörper (12) im ID-1-Format der Norm ISO 7816 ist.

6. Vorrichtung (10) nach einem der vorhergehenden Ansprüche, wobei der Kartenkörper (12) mit einer Schwächungslinie (16) versehen ist, die wenigstens zwei Bereiche, welche jeweils eines der elektronischen Etiketten (14A, 14B) tragen, trennt.

7. Vorrichtung (10) nach einem der vorhergehenden Ansprüche, wobei jedes elektronische Etikett (14A, 14B) in dem Kartenkörper (12) vorgeschnitten ist.

8. Vorrichtung (10) nach einem der vorhergehenden Ansprüche, wobei die Mittel zur magnetischen Abschirmung (26A, 26B) eine Ferritschicht (32) umfassen.

9. Vorrichtung (10) nach einem der vorhergehenden Ansprüche, wobei die Nahfeldkommunikationsmittel (20A, 20B) eine Nahfeldkommunikationsantenne (22A, 22B) und einen mit der Antenne (22A, 22B) verbundenen Mikroschaltkreis (24A, 24B) umfassen.

10. Vorrichtung (10) nach dem vorhergehenden Anspruch, wobei bei jedem elektronischen Etikett (14A, 14B) die Abschirmungsmittel (26A, 26B) eine gesamte Fläche (S) der Antenne (22A, 22B) oder einen Teil dieser bedecken.

11. Vorrichtung (10) nach einem der vorhergehenden Ansprüche, wobei der Kartenkörper (12) aus einem Kunststoff gefertigt ist.

12. Verfahren zur Herstellung einer elektronischen Vorrichtung (10) nach einem der vorhergehenden Ansprüche, umfassend einen Schritt zur Personalisierung wenigstens des ersten Etiketts (14A) durch Anlegen eines Magnetfeldes (B) an den Kartenkörper (12), **dadurch gekennzeichnet, daß** der Kartenkörper (12) umgedreht wird, um das zweite Etikett (14B) zu personalisieren.
